# EUROPEAN PATENT APPLICATION

(11) **EP 2 660 212 A1**
(43) Date of publication of application: **06.11.2013**
(21) Application number: 13166192.8
(22) Date of filing: 02.05.2013
(51) Int. Cl.: C03B 37/014

(54) **Optical fiber preform manufacturing method**

(30) Priority: 02.05.2012 JP 2012105128
(71) Applicant: Shin-Etsu Chemical Co., Ltd., Chiyoda-ku, Tokyo 100-0004 (JP)
(72) Inventor: Inoue, Dai, Ibaraki, 314-0102 (JP)
(74) Representative: Michalski Hüttermann & Partner Patentanwälte

(57) **Abstract**

In an optical fiber preform manufacturing method including: exposing a soot-deposited object to a high temperature of 1000 to 1300°C in a chlorine-containing atmosphere to dehydrate the soot-deposited object, the soot-deposited object being formed by deposition of silicon dioxide soot; and vitrifying the soot-deposited object into a transparent glass by exposing the soot-deposited object to a high temperature of 1300 to 1600°C in an atmosphere containing inert gas and fluorine compound gas, but not containing oxygen, the fluorine compound gas does not contain carbon.

## Description

### BACKGROUND

### 1. TECHNICAL FIELD

The present invention relates to an optical fiber preform manufacturing method.

### 2. RELATED ART

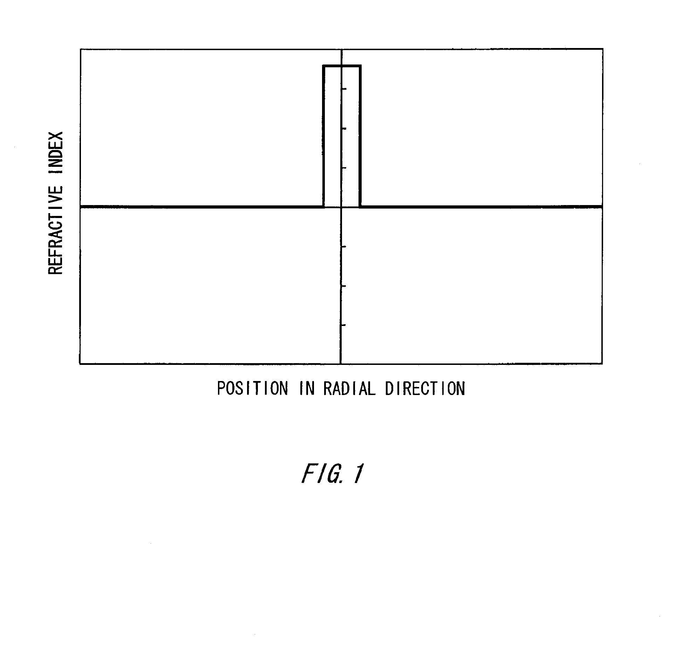

An optical fiber is manufactured by synthesizing quartz doped with a substance that can change the refractive index of the quartz. Fig. 1 is a graph that shows a refractive index distribution of a step-index type optical fiber.

In a step-index type optical fiber, a core through which light propagates shows an approximately rectangular refractive index distribution, and a refractive index distribution of a cladding outside the core shows a flat refractive index distribution. The cladding is formed, for example, with substantially pure quartz containing a trace amount of chlorine. The core is formed with quartz doped with a substance, e.g., germanium, that can increase the refractive index of the quartz.

In recent years, it is desired to suppress degradation of transmission loss characteristics that are observed when an optical fiber is bent. ITU-T (International Telecommunication Union-Telecommunication Standardization Sector) has developed the standard called G. 657 about bend loss characteristics of optical fibers. A trench-assisted type or depressed type optical fiber shows a refractive index distribution that is desired in terms of the bend loss characteristics stipulated in the standard.

Fig. 2 is a graph that shows a refractive index distribution of a trench-assisted type optical fiber. The refractive index distribution of a trench-assisted type optical fiber has a part with a low refractive index called a trench at a position that is apart from the core.

Fig. 3 is a graph of a refractive index distribution of a depressed type optical fiber. In the refractive index distribution of a depressed type optical fiber, the refractive index of the parts surrounding the core is lower than that of the cladding.

An optical fiber is manufactured by heating and softening a rod-like glass body called an optical fiber preform in an electric furnace, and extending the glass body to attain a predetermined outer diameter. This step is called a drawing step.

A refractive index distribution in a cross section of an optical fiber that is manufactured with an optical fiber preform as a source material has a similar figure as an optical index distribution in a cross section of the optical fiber preform. Accordingly, when manufacturing an optical fiber that is desired to have a certain refractive index distribution, an optical fiber preform having a refractive index distribution that has a figure attained by expanding the refractive index distribution desired for the optical fiber in radial directions is prepared.

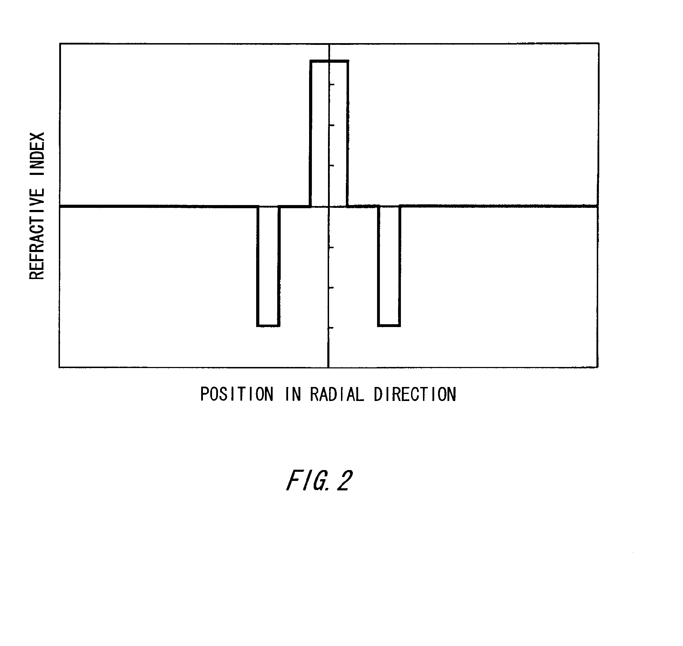

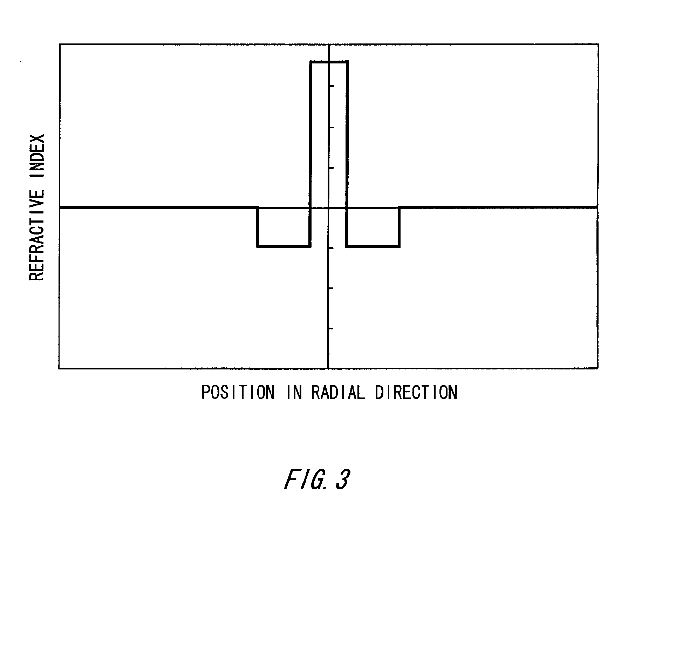

When manufacturing an optical fiber having a refractive index distribution shown in Fig. 2 or 3, an intended refractive index distribution is attained by doping an optical fiber preform with a substance that can increase the refractive index of synthetic quartz and a substance that can lower the refractive index.

Examples of substances that can increase the refractive index of synthetic quartz include germanium, phosphorus and chlorine. Also, examples of substances that can lower the refractive index of synthetic quartz include fluorine.

When an optical fiber preform is doped with fluorine that is used as a substance to lower the refractive index, as in the case of doping with germanium, deposits of soot is doped with a fluorine compound, or a fluorine compound may be mixed to atmospheric gas at a step of vitrification into a transparent glass or, prior to the step, at a step of dehydration.

Examples of optical fiber preform manufacturing methods include MCVD (modified chemical vapor deposition), PCVD (plasma-enhanced chemical vapor deposition), VAD (vapor phase axial deposition) and OVD (outside vapor deposition).

When a preform is manufactured by MCVD or PCVD, source gas containing silicon tetrachloride, carrier gas and oxygen are supplied into a tube made with synthetic quartz. Furthermore, in MCVD, the tube is heated from the outside with flames to cause oxidation of the source gas inside the tube. In PCVD, plasma is generated in the tube to cause oxidation of the source gas inside the tube. Thereby, silicon dioxide is generated, deposited in the tube and vitrified into a transparent glass.

The source gas may contain, beside silicon tetrachloride, germanium tetrachloride, fluorine compound gas and the like. Also, the fluorine compound gas may be fluorocarbon-based gas such as CF₄ and C₂F₆ as these are inexpensive, stable at a normal temperature and thus easy to handle.

In VAD and OVD, fine powder consisting mainly of silicon dioxide is deposited to produce a soot-deposited object. Silicon dioxide is manufactured by hydrolysis of a silicon compound such as silicon tetrachloride with hydrogen-oxygen flames.

In the above-described methods, if silicon tetrachloride is doped with germanium tetrachloride in advance, the germanium tetrachloride as well as the silicon tetrachloride is hydrolyzed, and a soot-deposited object is doped with germanium dioxide. The refractive index of a part of an optical fiber preform doped with germanium becomes higher than those of other parts.

The thus-produced soot-deposited object is subjected to dehydration by exposure to a high-temperature atmosphere containing for example chlorine. Thereby, an increase of transmission losses caused by moisture (OH radicals) contained in an optical fiber can be prevented.

The dehydrated soot-deposited object is exposed to a high temperature in an atmosphere containing inert gas as its principal ingredient. Thereby, the soot-deposited object is vitrified into a transparent glass which serves as an optical fiber preform.

### SUMMARY

When manufacturing an optical fiber preform by VAD or OVD, sharp absorption peaks are observed often in a loss spectrum if doping with fluorine is performed at the time of vitrification into a transparent glass in order to manufacture an optical fiber preform having a depressed type refractive index distribution.

In an optical signal transmission method such as DWDM (dense wavelength division multiplex), a loss spectrum distribution is desirably flat. Accordingly, it is not preferred to observe sharp absorption peaks that are predicted to cause degradation of transmission characteristics.

The present invention provides an optical fiber preform manufacturing method that includes: exposing a soot-deposited object to a high temperature of 1000 to 1300°C in a chlorine-containing atmosphere to dehydrate the soot-deposited object, the soot-deposited object being formed by deposition of silicon dioxide soot; and vitrifying the soot-deposited object into a transparent glass by exposing the soot-deposited object to a high temperature of 1300 to 1600°C in an atmosphere containing inert gas and fluorine compound gas, but not containing oxygen, wherein the fluorine compound gas does not contain carbon.

In the above-described method, the fluorine compound gas may be silicon tetrafluoride, sulfur hexafluoride and the like. The inert gas may be helium. The soot-deposited object may be manufactured by VAD or OVD. For example, a predetermined radial range around a central axis of the manufactured soot-deposited object is doped with germanium, the predetermined radial range extending along the central axis.

The summary clause does not necessarily describe all necessary features of the embodiments of the present invention. The present invention may also be a sub-combination of the features described above.

### BRIEF DESCRIPTION OF THE DRAWINGS

Fig. 1 is a graph that shows a refractive index distribution of a step-index type optical fiber.
Fig. 2 is a graph that shows a refractive index distribution of a trench-assisted type optical fiber.
Fig. 3 is a graph of a refractive index distribution of a depressed type optical fiber.

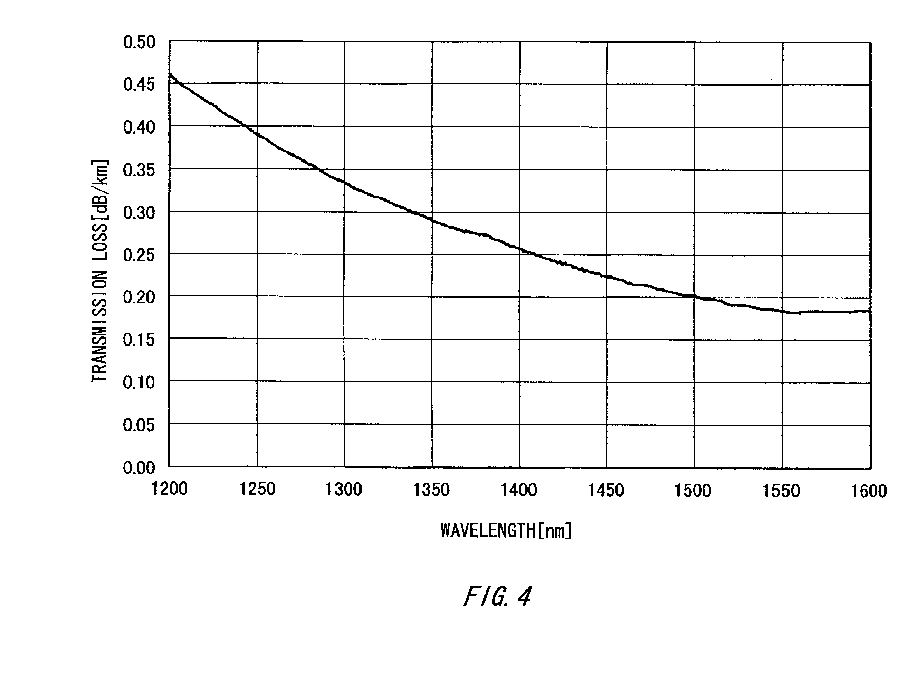

Fig. 4 is a graph that shows a loss spectrum observed in Example 1.

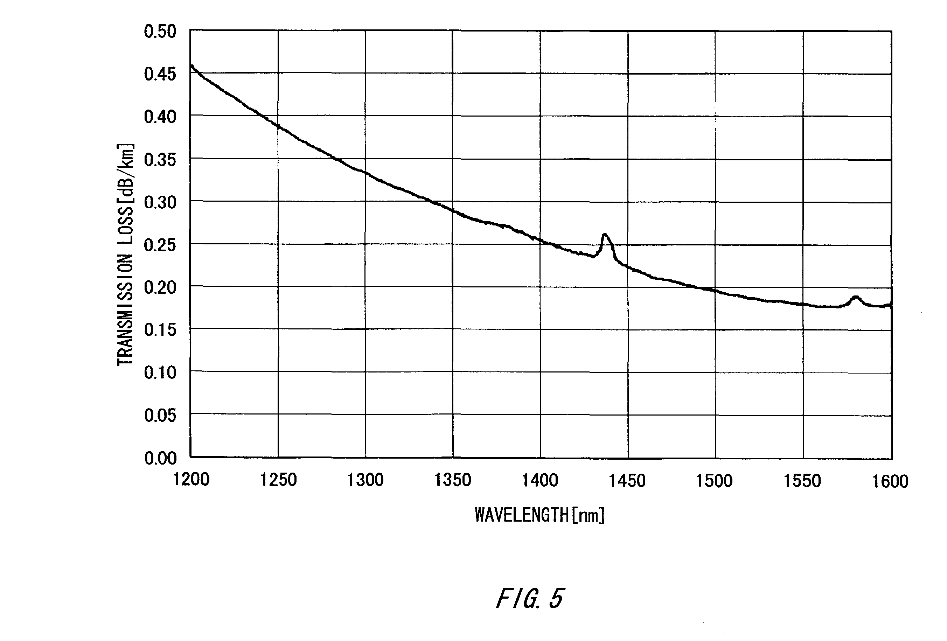

Fig. 5 is a graph that shows a loss spectrum observed in Comparative Example 1.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

A soot-deposited object having, at a center thereof, a core doped with germanium was manufactured by VAD. Next, the soot-deposited object was heated to approximately 1100°C and was dehydrated in an electric furnace in an atmosphere where chlorine 1 [l/min], helium 15 [l/min] and oxygen 0.01 [l/min] were mixed. Thereby, an increase of transmission losses caused by moisture (OH radicals) contained in an optical fiber can be prevented.

When the processing temperature in dehydration is lower than 1000°C, adequate dehydration cannot occur. Also, when the processing temperature in the dehydration exceeds 1300°C, the density of the soot-deposited object becomes so high before the soot-deposited object is dehydrated adequately that adequate dehydration is not possible. Therefore, the soot-deposited object is dehydrated preferably at a temperature within a range of 1000 to 1300°C.

Then, the atmosphere, in the same electric furnace, where helium 20 [1/min] and SiF₄ 0.1 [l/min] were mixed, was heated to approximately 1500°C, and, in the atmosphere, the soot-deposited object was vitrified into a transparent glass. A glass rod was obtained, and a clad was deposited on the glass rod by OVD. The glass rod was heated in the electric furnace in an atmosphere where chlorine and helium were mixed, and was vitrified into a transparent glass which serves as an optical fiber preform.

The soot-deposited object is vitrified into a transparent glass in an atmosphere containing gas that is inert at a temperature of 1300 to 1600°C and fluorine compound gas, but not containing oxygen. Thereby, an optical fiber preform can be produced without generating residual carbon.

The thus-produced optical fiber preform was drawn to manufacture an optical fiber. Fig. 4 is a graph that shows measurement results of a loss spectrum of the manufactured optical fiber. As shown in Fig. 4, peaks are not particularly observed in the loss spectrum. Accordingly, the optical fiber can be used suitably for transmission of optical signals in DWDM or other signal transmission methods.

### Comparative Example

A soot-deposited object having, at a center thereof, a core doped with germanium was manufactured by VAD. Next, the soot-deposited object was heated to approximately 1100°C and was dehydrated in an electric furnace in an atmosphere where chlorine 1 [l/min], helium 15 [l/min] and oxygen 0.01 [l/min] were mixed.

Then, the atmosphere, in the same electric furnace, where helium 20 [1/min] and CF₄ 0.1 [l/min] were mixed, was heated to approximately 1500°C, and, in the atmosphere, the soot-deposited object was vitrified into a transparent glass. A glass rod was obtained, and a clad was deposited on the glass rod by OVD. The glass rod was heated in the electric furnace in an atmosphere where chlorine and helium were mixed, and was vitrified into a transparent glass which serves as an optical fiber preform.

The optical fiber preform was drawn to manufacture an optical fiber. Fig. 5 is a graph that shows measurement results of a loss spectrum of the obtained optical fiber.

As shown in Fig. 5, with the thus-manufactured optical fiber, noticeable absorption peaks are observed at around 1440 nm and around 1580 nm. Such absorption peaks become a cause for degradation of signal transmission characteristics.

When fluorocarbon-based gas was used for the purpose of doping with fluorine as in the comparative example, absorption peaks estimated to be caused by carbon were observed with the optical fiber. In a method in which a soot-deposited object is vitrified into a transparent glass by VAD or OVD, doping with fluorine is performed in an atmosphere not containing oxygen, which is assumed to be a reason why carbon remained in the optical fiber preform.

A method of mixing oxygen to atmospheric gas for vitrification into a transparent glass in order to oxidize and remove carbon was considered also. However, if vitrification into a transparent glass is performed in the presence of oxygen, oxygen excess defects increase in an optical fiber preform. Therefore, it can be estimated that, after a long term use of the optical fiber, transitional absorption loss peaks will appear in the wavelength region of 1525 nm, and transmission loss characteristics will be degraded. In comparison to this, an optical fiber preform from which an optical fiber with no absorption peaks could be produced was formed by using, as a fluorine compound, gas not containing carbon such as fluorine tetrachloride and sulfur hexafluoride at the step of doping with fluorine.

Although fluorocarbon-based gas is used at high concentrations in MCVD and PCVD, absorption peaks like the ones described above were not observed. This may be because oxygen, which is supplied together with fluorocarbon-based gas, oxidizes carbon to form carbon dioxide and the like which are to be discharged, and accordingly carbon does not remain in an optical fiber preform.

While the embodiment(s) of the present invention has (have) been described, the technical scope of the invention is not limited to the above described embodiment(s). It is apparent to persons skilled in the art that various alterations and improvements can be added to the above-described embodiment(s). It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

## Claims

1. An optical fiber preform manufacturing method comprising:
exposing a soot-deposited object to a high temperature of 1000 to 1300°C in a chlorine-containing atmosphere to dehydrate the soot-deposited object, the soot-deposited object being formed by deposition of silicon dioxide soot; and
vitrifying the soot-deposited object into a transparent glass by exposing the soot-deposited object to a high temperature of 1300 to 1600°C in an atmosphere containing inert gas and fluorine compound gas, but not containing oxygen, wherein
the fluorine compound gas does not contain carbon.

2. The optical fiber preform manufacturing method according to Claim 1, wherein the fluorine compound gas contains at least one of silicon tetrafluoride and sulfur hexafluoride.

3. The optical fiber preform manufacturing method according to Claim 1 or 2, wherein a predetermined radial range around a central axis of the soot-deposited object is doped with germanium, the predetermined radial range extending along the central axis.

4. The optical fiber preform manufacturing method according to any one of Claims 1 to 3, wherein the soot-deposited object is manufactured by VAD or OVD.

5. The optical fiber preform manufacturing method according to any one of Claims 1 to 4, wherein the inert gas includes helium.
